# EUROPEAN PATENT APPLICATION

(11) **EP 4 524 212 A1**
(43) Date of publication of application: **19.03.2025**
(21) Application number: 23803698.2
(22) Date of filing: 04.04.2023
(51) Int. Cl.: C09D 163/00, C09D 5/03, C09D 7/61, C09D 7/40, C09D 7/65, B05C 19/02, B05C 19/00

(54) **TWO-COAT PAINTING SYSTEM**

(30) Priority: 12.05.2022 KR 20220058223
(71) Applicant: KCC Corporation, Seoul 06608 (KR)
(72) Inventor: KOO, Sang Youn, Wanju-gun, Jeollabuk-do 55317 (KR); KIM, Young Ha, Yongin-si, Gyeonggi-do 16811 (KR); KIM, Jin Tae, Jeonju-si, Jeollabuk-do 55148 (KR); HAN, Kwang Seo, Wanju-gun, Jeollabuk-do 55317 (KR); KIM, Chan Gi, Yongin-si, Gyeonggi-do 16988 (KR); SO, Byoung Ki, Seoul 05274 (KR)
(74) Representative: Pfenning, Meinig & Partner mbB
(86) International application number: PCT/KR2023/004502
(87) International publication number: WO 2023/219273

(57) **Abstract**

The present invention relates to a two-coat coating system comprising an undercoat coating composition and a topcoat coating composition, wherein the undercoat coating composition is a powder coating composition that comprises a bisphenol A type epoxy resin, an epoxy toughening agent, a hardener, and a foaming agent, and does not contain zinc, and the topcoat coating composition is a powder coating composition that comprises a bisphenol A type epoxy resin, an epoxy toughening agent, a hardener, a foaming agent, and an extender pigment having an average particle size of 10 µm or more, and the two-coat coating system exhibits excellent corrosion resistance, impact resistance, chipping resistance, hardness, thick-coated film pinhole stability, and coating efficiency.

## Description

### [Technical Field]

The present invention relates to a two-coat coating system using a powder coating composition exhibiting excellent corrosion resistance, impact resistance, chipping resistance, hardness, thick-coated film pinhole stability, and coating efficiency.

### [Background Art]

Metals such as aluminum, titanium, and copper are used as main materials for automobiles, industrial equipment, and buildings, and the metal surface is coated with a powder coating composition to protect it from harsh external environments. The powder coating composition is environmentally friendly because it does not contain volatile organic compounds such as benzene, xylene, and toluene, and since the powder coating composition has no odor caused by organic solvents, it can improve laborers' working efficiency. Powder coatings can be applied using an electrostatic coating method of applying different electrodes to the substrate and the spray device to adhere the powder coating to the substrate, which makes it possible to apply the powder coating to the desired thickness only a few times and obtain a film with a uniform thickness and appearance because it does not flow down unlike a liquid coating. In addition, the powder coating produces less waste because the powder coating which is not applied to the substrate can be recycled after being recovered using a recovery device.

Powder coating compositions applied to protect the metal surface require various properties such as heat resistance, corrosion resistance, weather resistance, acid resistance, alkali resistance, gloss, and adhesion, and in particular, coating compositions applied to coil springs on the underside of automobiles have to ensure excellent impact resistance, chipping resistance, and hardness.

For these reasons, various studies have been conducted on coating compositions with excellent impact resistance. For example, WO 2011/012627 A2 discloses a powder coating composition composed of an undercoat containing an epoxy resin, plate-shaped filler, and zinc and a topcoat containing an epoxy resin, an elastomer-modified bisphenol A epoxy resin, and a foaming agent. The coating composition of the above patent contains zinc in the undercoat to prevent rust and an excessive amount of foaming agent to protect against external impacts.

However, when zinc is contained, the specific gravity of the powder coating containing zinc may increase due to the high specific gravity of zinc. When a powder coating with an increased specific gravity is applied using the electrostatic coating method, heavy coating particles are difficult to disperse and the amount of coating particles that fall into the recovery device is greater than that of coating particles that adhere to the substrate, which leads to a decrease in electrostatic coating efficiency. A decrease in electrostatic coating efficiency means that a coating film sufficient to protect the substrate has not been formed, and to compensate for this, coating needs to be applied several times, which causes inconvenience and reduces efficiency. Besides, due to an uneven zinc content, it may be difficult to recycle coatings which are not adhered to the substrate and are recovered in a recovery device, and in this case, the recovered coating has to be discarded, thereby increasing industrial waste.

When an excessive amount of foaming agent is used to absorb external impacts, the appearance characteristics and hardness of the coating film may deteriorate, and there is a problem in that appearance defects occur due to pinholes occurring in the thick-coated film when coated after preheating the material.

Meanwhile, the topcoat/undercoat dual coating system requires two separate coatings and coating booths for the topcoat and undercoat, and coating productivity is reduced due to moving the coating booths. Therefore, the topcoat/undercoat dual coating system is inferior to the single coating system in terms of management and productivity.

### [Disclosure]

### [Technical Problem]

The present invention provides a two-coat coating system using a powder coating composition having excellent corrosion resistance, impact resistance, chipping resistance, hardness, thick-coated film pinhole stability, and coating efficiency.

### [Technical Solution]

The present invention relates to a two-coat coating system including an undercoat coating composition and a topcoat coating composition,
wherein the undercoat coating composition is a powder coating composition that includes a bisphenol A type epoxy resin, an epoxy toughening agent, a hardener, and a foaming agent and does not contain zinc, and
the topcoat coating composition is a powder coating composition that includes a bisphenol A type epoxy resin, an epoxy toughening agent, hardener, a foaming agent, and an extender pigment having an average particle size of 10 µm or more.

### [Advantageous Effects]

The present invention provides a two-coat coating system using a powder coating composition having excellent corrosion resistance, impact resistance, chipping resistance, hardness, thick-coated film pinhole stability, and coating efficiency. **In** particular, the two-coat coating system according to the present invention can be applied to coil springs on the underside of automobiles.

### [Best modes of the Invention]

Hereinafter, the present invention will be described. However, it is not limited to the following content, and each component may be variously modified or selectively mixed as needed. Therefore, it should be understood to include all changes, equivalents, and substitutes included in the spirit and technical scope of the present invention.

The "weight average molecular weight" used herein is measured by conventional methods known in the art, and may be measured, for example, using a gel permeation chromatograph (GPC). "Viscosity" is measured by conventional methods known in the art, and may be measured, for example, using a capillary flowmeter tester (CFT) or Brookfield viscometer. The "softening point" is measured by conventional methods known in the art, and may be measured, for example, using the dropping point system calorimetry DP70 from METTLER TOLEDO. The "particle size (D50)" is measured by conventional methods known in the art, and may be measured, for example, using laser light scattering (LLS).

The present invention relates to a two-coat coating system including an undercoat coating composition and a topcoat coating composition, wherein the undercoat coating composition is a powder coating composition that includes a bisphenol A type epoxy resin, an epoxy toughening agent, a hardener, and a foaming agent and does not contain zinc, and the topcoat coating composition is a powder coating composition that includes a bisphenol A type epoxy resin, an epoxy toughening agent, a hardener, a foaming agent, and an extender pigment having an average particle size of 10 µm or more. Therefore, the present invention may solve the problems of conventional coatings in which the specific gravity of coatings may increase due to the use of zinc, and the electrostatic coating efficiency may decrease, which results in increased amounts of recovered coatings and discarded coatings, and in which pinholes may be formed due to the use of an excessive amount of foaming agent.

### <Undercoat>

An undercoat coating composition of the present invention includes a bisphenol A type epoxy resin, an epoxy toughening agent, a hardener, and a foaming agent and does not contain zinc.

### Bisphenol A type epoxy resin

The undercoat coating composition according to the present invention contains a bisphenol A type epoxy resin. In order to ensure excellent mechanical properties, a bisphenol A type epoxy resin having a linear structure may be used.

Coatings that do not contain zinc may have a reduced rust preventing property. To compensate for this, the powder coating composition of the present invention may contain an epoxy resin with a high equivalent weight. The epoxy equivalent weight of the bisphenol A type epoxy resin may be 1,000 to 1,500 g/eq, for example, 1,100 to 1,200 g/eq. When the epoxy equivalent weight is less than the above range, the crosslink density of the coating film may decrease as the number of epoxy groups capable of forming crosslinks decreases, and thus mechanical properties such as rust prevention, flexibility, and impact resistance may deteriorate. When the epoxy equivalent weight exceeds the above range, the reaction rate increases as the number of epoxy groups capable of forming crosslinks increases, and the coating hardens before it is sufficiently spread, which may cause pinholes in the coating film or reduce the leveling property.

The weight average molecular weight of the bisphenol A type epoxy resin may be 5,000 to 12,000 g/mol, for example, 7,000 to 9,000 g/mol. When the weight average molecular weight is less than the above range, the amount of epoxy resin that can form a coating film decreases, which may reduce the appearance characteristics, and when the weight average molecular weight exceeds the above range, the adhesion of the coating film to the substrate may be reduced.

The viscosity (200 °C) of the bisphenol A type epoxy resin may be 10 to 35 poise, for example, 18 to 28 poise. When the viscosity is less than the above range, since dispersibility with other components may be reduced, the storability of the coating may be reduced, and when the viscosity exceeds the above range, the wetting property of the coating may be reduced.

The softening point of the bisphenol A type epoxy resin may be 100 to 140 °C, for example, 115 to 122 °C. When the softening point of the epoxy resin is less than the above range, the melt viscosity of the resin may decrease and cause poor flow (sagging) of the coating film, making it difficult to form a coating film at the edges, and when the softening point of the epoxy resin exceeds the above range, the melt viscosity may increase, causing the leveling property to decrease.

Based on the total weight of the undercoat coating composition, the bisphenol A type epoxy resin may be contained in an amount of 65 to 75 wt%, for example, 67 to 73 wt%. When the content of the bisphenol A type epoxy resin is less than the above range, corrosion resistance and impact resistance may be reduced, and when the content of the bisphenol A type epoxy resin exceeds the above range, chipping resistance, hardness, and the like may be reduced.

### Epoxy toughening agent

The undercoat coating composition of the present invention includes an epoxy toughening agent. Epoxy resins are vulnerable to momentary impacts due to their brittleness caused by high crosslinking density. **In** the present invention, the brittleness of the epoxy resin may be improved by mixing a toughening agent with the epoxy resin. The epoxy toughening agent forms a fine dispersed phase in the matrix resin to absorb external impacts and thus may improve toughness (resistance to crack propagation) without increasing formulation viscosity or affecting the modulus and glass transition temperature.

The epoxy toughening agent may be an amphipathic hydroxyl group-containing block copolymer or a mixture containing the same. The amphipathic hydroxyl group-containing copolymer includes a hydrophilic block and a hydrophobic block, and the hydrophilic block may be one or more selected from polyethylene oxide, a polyethylene-polypropylene copolymer, polymethyl methacrylate, and polyacrylamide, and the hydrophobic block may be one or more selected from polybutylene oxide, polyhexylene oxide, polydodecylene oxide, and polyacrylamide.

The epoxy equivalent weight of the epoxy toughening agent may be 800 to 1,200 g/eq, for example, 950 to 1,100 g/eq. When the epoxy equivalent weight of the epoxy toughening agent is less than the above range, toughness may be reduced, and when the epoxy equivalent weight of the epoxy toughening agent exceeds the above range, the appearance characteristics and wetting properties may deteriorate due to a decrease in the flowability of the coating film.

The melting point of the epoxy toughening agent may be 80 to 120 °C, for example, 95 to 110 °C. When the melting point of the epoxy toughening agent is less than the above range, adhesion may be reduced, and when the melting point of the epoxy toughening agent exceeds the above range, the appearance characteristics and wetting properties may deteriorate due to a decrease in the flowability of the coating film.

Based on the total weight of the undercoat coating composition, the epoxy toughening agent may be contained in an amount of 5 to 15 wt%, for example, 7 to 11 wt%. When the content of the epoxy toughening agent is less than the above range, the flowability of the coating may be reduced, and when the content of the epoxy toughening agent exceeds the above range, chipping may occur.

### Hardener

The undercoat coating composition of the present invention includes a hardener. As the hardener, a phenol hardener, for example, a bisphenol A type phenol hardener may be used. When a phenol hardener is applied, low-temperature curing is possible compared to when an amine hardener is used, and it helps to impart flexibility to the coating film.

The hydroxyl equivalent weight of the phenol hardener may be 200 to 300 g/eq, for example, 230 to 280 g/eq. When the hydroxyl equivalent weight is less than the above range, the coating film may become excessively hard, resulting in reduced flexibility, and when the hydroxyl equivalent weight exceeds the above range, the coating film may become excessively soft, resulting in improved flexibility, but reduced impact resistance.

The softening point of the phenol hardener may be 75 to 95 °C, for example, 83 to 87 °C. When the softening point is below the above range, adhesion may be reduced, and when the softening point exceeds the above range, the appearance characteristics may deteriorate.

The viscosity (150 °C) of the phenol hardener may be 1 to 10 poise, for example, 2 to 5 poise. When the viscosity is less than the above range, the coating film may become excessively hard, resulting in reduced flexibility, and when the viscosity exceeds the above range, the coating film may become excessively soft, resulting in improved flexibility, but reduced impact resistance.

Based on the total weight of the undercoat coating composition, the hardener may be contained in an amount of 15 to 25 wt%, for example, 17 to 24 wt%. When the hardener content is less than the above range, as curing is not sufficiently achieved, the strength of the coating film may decrease due to a decrease in crosslinking density. When the hardener content exceeds the above range, the crosslinking density of the coating film rapidly increases due to overcuring, which may reduce adhesion.

### Foaming agent

The undercoat coating composition of the present invention includes a foaming agent. The foaming agent serves to absorb external impacts by generating foam in the coating film during the curing of the coating.

As the foaming agent, any conventional foaming agent known in the art may be used without limitation. For example, a hydrazide-based foaming agent, an isopentane-based foaming agent, and the like may be used. These components may be used alone or in combination of two or more thereof.

As the hydrazide-based foaming agent, Unicell-OH, Unicell-OH-300N, Unicell-OHW2, and Unicell-OHC from Dongjin Semichem Co., Ltd. may be used. For example, Unicell-OH and Unicell-OHW2 may be used. As the isopentane-based foaming agent, EXPANCEL 920 DU 20, EXPANCEL 920 DU 40, and EXPANCEL 920 DU 80 from EXPANCEL Inc. may be used, and for example, EXPANCEL 920 DU 20 and EXPANCEL 920 DU 40 may be used.

Based on the total weight of the undercoat coating composition, the foaming agent may be contained in an amount of 0.7 wt% or less, for example, 0.1 to 0.65 wt%. When the content of the foaming agent is within the above range, low-temperature impact resistance and chipping resistance may be complemented without deteriorating the appearance and hardness of the coating film. When the content of the foaming agent is less than the above range, since pores in the coating film are not sufficiently formed, the effect of absorbing external impacts decreases, and thus impact resistance may be reduced, and when the content of the foaming agent exceeds the above range, excessive pores are formed in the coating film, which may affect the upper side of the coating film, and thus appearance characteristics may be reduced due to the occurrence of pinholes and the hardness of the coating film may be reduced.

### Curing accelerator

The undercoat coating composition of the present invention may further contain a curing accelerator. The curing accelerator is a substance that promotes the reaction between the epoxy resin, which is the main resin, and the hardener, and for example, an imidazole-based curing accelerator, a phosphonium-based curing accelerator, an amine-based curing accelerator, and a metal-based curing accelerator may be used.

For example, the curing accelerator may be an imidazole curing accelerator and may be, for example, a bisphenol A type epoxy modified imidazole curing accelerator. The amine value of the curing accelerator may be 150 to 250 mgKOH/g, for example, 170 to 210 mgKOH/g. When the amine value of the curing accelerator is less than the above range, reactivity may decrease, and thus mechanical properties may be reduced, and when the amine value exceeds the above range, the reaction rate may increase, and thus pinholes may occur.

The content of the curing accelerator may be appropriately adjusted depending on the reactivity of the binder resin and the hardener. For example, based on the total weight of the undercoat coating composition, the curing accelerator may be contained in an amount of 0.1 to 5 wt%, for example, 1 to 5 wt%. When the content of the curing accelerator is outside the above range, the mechanical properties of the coating film may be reduced.

### Additives

The undercoat coating composition of the present invention may optionally further include additives commonly used in the powder coating field within the range that does not impact the inherent properties of the composition. As non-limiting examples of additives that may be used in the present invention, waxes, pinhole prevention agents, leveling agents, and colored pigments may be used, and these may be used alone or in combination of two or more thereof.

As a wax, any conventional wax known in the art may be used without limitation, and a polyethylene wax, a polyamide wax, and the like may be used. For example, scratch resistance and hardness may be improved by using a polytetrafluoroethylene (PTFE)-based wax, which has excellent wear resistance and slip properties.

A pinhole prevention agent may prevent pinholes from forming in the coating film and improve appearance characteristics by allowing volatile substances to be released from the coating film during the curing process. As non-limiting examples of pinhole prevention agents, an amide-based (such as Ceraflour 960 from BYK-Chemie), a polypropylene-based, and a stearic acid-based pinhole prevention agent may be used. For example, benzoin or a mixture of benzoin and amide-based pinhole prevention agents may be used as a pinhole prevention agent, and in this case, the effect of preventing pinholes when forming an overcoat for high corrosion resistance may be excellent.

The colored pigment may impart color to the coating film and enhance the appearance characteristics. Titanium dioxide, carbon black, and the like may be used as the colored pigment.

The additives may be appropriately added within the content ranges known in the art. For example, each of the additives may be used in an amount of 0.01 to 10% by weight based on the total weight of the undercoat coating composition.

### <Topcoat>

The topcoat coating composition of the present invention includes a bisphenol A type epoxy resin, an epoxy toughening agent, a hardener, a foaming agent, and an extender pigment having an average particle size of 10 µm or more.

### Bisphenol A type epoxy resin

The topcoat coating composition according to the present invention contains a bisphenol A type epoxy resin. In order to ensure excellent mechanical properties, a bisphenol A type epoxy resin having a linear structure may be used.

The epoxy equivalent weight of the bisphenol A type epoxy resin may be 1,000 to 1,500 g/eq, for example, 1,100 to 1,200 g/eq. When the epoxy equivalent weight is less than the above range, the crosslink density of the coating film may decrease as the number of epoxy groups capable of forming crosslinks decreases, and thus mechanical properties such as rust prevention, flexibility, and impact resistance may deteriorate. When the epoxy equivalent weight exceeds the above range, the reaction rate increases as the number of epoxy groups capable of forming crosslinks increases, and the coating hardens before it is sufficiently spread, which may cause pinholes in the coating film or reduce the leveling property.

The weight average molecular weight of the bisphenol A type epoxy resin may be 5,000 to 12,000 g/mol, for example, 7,000 to 9,000 g/mol. When the weight average molecular weight is less than the above range, the appearance characteristics may reduce, and when the weight average molecular weight exceeds the above range, the adhesion of the coating film to the substrate may be reduced.

The viscosity (200 °C) of the bisphenol A type epoxy resin may be 10 to 35 poise, for example, 18 to 28 poise. When the viscosity is less than the above range, since dispersibility with other components may be reduced, the storability of the coating may be reduced, and when the viscosity exceeds the above range, the wetting property of the coating may be reduced.

The softening point of the bisphenol A type epoxy resin may be 100 to 140 °C, for example, 115 to 122 °C. When the softening point of the epoxy resin is less than the above range, the melt viscosity of the resin may decrease and cause poor flow (sagging) of the coating film, making it difficult to form a coating film at the edges, and when the softening point of the epoxy resin exceeds the above range, the melt viscosity may increase, causing the leveling property to decrease.

Based on the total weight of the topcoat coating composition, the bisphenol A type epoxy resin may be contained in an amount of 50 to 65 wt%. When the content of the bisphenol A type epoxy resin is less than the above range, corrosion resistance and impact resistance may be reduced, and when the content of the bisphenol A type epoxy resin exceeds the above range, chipping resistance, hardness, and the like may be reduced.

### Epoxy toughening agent

The topcoat coating composition of the present invention includes an epoxy toughening agent. Epoxy resins are vulnerable to momentary impacts due to their brittleness caused by high crosslinking density. **In** the present invention, the brittleness of the epoxy resin may be improved by mixing a toughening agent with the epoxy resin. The epoxy toughening agent forms a fine dispersed phase in the matrix resin to absorb external impacts and thus may improve toughness (resistance to crack propagation) without increasing formulation viscosity or affecting the modulus and glass transition temperature.

The epoxy toughening agent may be an amphipathic hydroxyl group-containing block copolymer or a mixture containing the same. The amphipathic hydroxyl group-containing copolymer includes a hydrophilic block and a hydrophobic block, and the hydrophilic block may be one or more selected from polyethylene oxide, a polyethylene-polypropylene copolymer, polymethyl methacrylate, and polyacrylamide, and the hydrophobic block may be one or more selected from polybutylene oxide, polyhexylene oxide, polydodecylene oxide, and polyacrylamide.

The epoxy equivalent weight of the epoxy toughening agent may be 800 to 1,200 g/eq, for example, 950 to 1,100 g/eq. When the epoxy equivalent weight of the epoxy toughening agent is less than the above range, toughness may be reduced, and when the epoxy equivalent weight of the epoxy toughening agent exceeds the above range, the appearance characteristics and wetting properties may deteriorate due to a decrease in the flowability of the coating film.

The melting point of the epoxy toughening agent may be 80 to 120 °C, for example, 95 to 110 °C. When the melting point of the epoxy toughening agent is less than the above range, adhesion may be reduced, and when the melting point of the epoxy toughening agent exceeds the above range, the appearance characteristics and wetting properties may deteriorate due to a decrease in the flowability of the coating film.

Based on the total weight of the topcoat coating composition, the epoxy toughening agent may be contained in an amount of 5 to 15 wt%, for example, 7 to 11 wt%. When the content of the epoxy toughening agent is less than the above range, the flowability of the coating may be reduced, and when the content of the epoxy toughening agent exceeds the above range, chipping may occur.

### Hardener

The topcoat coating composition of the present invention includes a hardener. As the hardener, a phenol hardener, for example, a bisphenol A type phenol hardener may be used. When a phenol hardener is applied, low-temperature curing is possible compared to when an amine hardener is used, and it helps to impart flexibility to the coating film.

The hydroxyl equivalent weight of the phenol hardener may be 200 to 300 g/eq, for example, 230 to 280 g/eq. When the hydroxyl equivalent weight is less than the above range, the coating film may become excessively hard, resulting in reduced flexibility, and when the hydroxyl equivalent weight exceeds the above range, the coating film may become excessively soft, resulting in improved flexibility, but reduced impact resistance.

The softening point of the phenol hardener may be 75 to 95 °C, for example, 83 to 87 °C. When the softening point is below the above range, adhesion may be reduced, and when the softening point exceeds the above range, the appearance characteristics may deteriorate.

The viscosity (150 °C) of the phenol hardener may be 1 to 10 poise, for example, 2 to 5 poise. When the viscosity is less than the above range, the coating film may become excessively hard, resulting in reduced flexibility, and when the viscosity exceeds the above range, the coating film may become excessively soft, resulting in improved flexibility, but reduced impact resistance.

Based on the total weight of the topcoat coating composition, the hardener may be contained in an amount of 5 to 15 wt%. When the hardener content is less than the above range, the strength of the coating film may decrease due to a decrease in crosslinking density. When the hardener content exceeds the above range, the crosslinking density of the coating film rapidly increases, which may reduce adhesion.

### Foaming agent

The topcoat coating composition of the present invention includes a foaming agent. The foaming agent serves to absorb external impacts by generating foam in the coating film during the curing of the coating.

As the foaming agent, any conventional foaming agent known in the art may be used without limitation. For example, a hydrazide-based foaming agent, an isopentane-based foaming agent, and the like may be used. These components may be used alone or in combination of two or more thereof.

As the hydrazide-based foaming agent, Unicell-OH, Unicell-OH-300N, Unicell-OHW2, and Unicell-OHC from Dongjin Semichem Co., Ltd. may be used. For example, Unicell-OH and Unicell-OHW2 may be used. As the isopentane-based foaming agent, EXPANCEL 920 DU 20, EXPANCEL 920 DU 40, and EXPANCEL 920 DU 80 from EXPANCEL Inc. may be used, and for example, EXPANCEL 920 DU 20 and EXPANCEL 920 DU 40 may be used.

Based on the total weight of the topcoat coating composition, the foaming agent may be contained in an amount of 0.7 wt% or less, for example, 0.1 to 0.65 wt%. When the content of the foaming agent is within the above range, low-temperature impact resistance and chipping resistance may be complemented without deteriorating the appearance and hardness of the coating film. When the content of the foaming agent is less than the above range, since pores in the coating film are not sufficiently formed, the effect of absorbing external impacts decreases, and thus impact resistance may be reduced, and when the content of the foaming agent exceeds the above range, excessive pores are formed in the coating film, which may affect the upper side of the coating film, and thus appearance characteristics may be reduced due to the occurrence of pinholes and the hardness of the coating film may be reduced.

### Extender pigment

The topcoat coating composition of the present invention may further contain an extender pigment. The extender pigment fills the pores in the coating film, complements the formation of the coating film, and provides build-up properties or mechanical properties to the coating film. Thus, when an extender pigment is contained, it is possible to obtain a good appearance, and at the same time, improve the hardness, impact resistance, and rust prevention of the coating film.

As the extender pigment, those conventionally used in powder coating compositions may be used without limitation, and as non-limiting examples, barium sulfate, dolomite, calcium carbonate, clay, talc, magnesium silicate, kaolin, mica, silica, aluminum silicate, and aluminum hydroxide may be used. These components may be used alone or in combination of two or more thereof. For example, the extender pigment may include barium sulfate.

Because the topcoat coating film may be formed to have a thickness larger than that of the undercoat coating film, curing may occur before air bubbles escape from the coating film, thereby increasing the probability of pinhole formation. To prevent this, the topcoat coating composition may include an extender pigment having an average particle size of 10 µm or more, for example 10 to 20 µm, and as another example, an average particle size of 10 to 15 µm. When the extender pigment having the above average particle size is included, diffuse reflection occurs on an uneven surface of the extender pigment, and thus pinhole formation may be suppressed, thereby securing excellent pinhole stability. When an extender pigment whose particle size deviates from the above average particle size is used, the diffuse reflection effect may be reduced, which results in reduced pinhole stability.

The shape of the extender pigment may be plate-shaped, spherical, or amorphous. For example, the shape of the extender pigment may be plate-shaped. When a plate-shaped extender pigment is used, it is possible to effectively prevent the occurrence of surface cracks due to the contraction and expansion of heat-resistant thick coating film.

Based on the total weight of the topcoat coating composition, the extender pigment may be contained in an amount of 5 to 50 wt%, for example, 15 to 25 wt%. When the content of the extender pigment is within the above range, the mechanical properties, impact resistance, adhesion, heat resistance of the coating film may be improved.

### Curing accelerator

The topcoat coating composition of the present invention may further contain a curing accelerator. The curing accelerator is a substance that promotes the reaction between the epoxy resin, which is the main resin, and the hardener, and for example, an imidazole-based curing accelerator, a phosphonium-based curing accelerator, an amine-based curing accelerator, and a metal-based curing accelerator may be used.

For example, the curing accelerator may be a bisphenol A type epoxy modified imidazole curing accelerator. The amine value of the curing accelerator may be 150 to 250 mgKOH/g, for example, 170 to 220 mgKOH/g.

The content of the curing accelerator may be appropriately adjusted depending on the reactivity of the binder resin and the hardener. For example, based on the total weight of the topcoat coating composition, the curing accelerator may be contained in an amount of 0.1 to 5 wt%, for example, 1 to 5 wt%. When the content of the curing accelerator is outside the above range, the mechanical properties of the coating film may be reduced.

### Additives

The topcoat coating composition of the present invention may optionally further include additives commonly used in the powder coating field within the range that does not impact the inherent properties of the composition. As non-limiting examples of additives that may be used in the present invention, dispersants, waxes, pinhole prevention agents, leveling agents, and colored pigments may be used, and these may be used alone or in combination of two or more thereof.

As a dispersant, any conventional dispersant known in the art may be used without limitation. For example, a polyacrylic dispersant that is adsorbed on the surface of the colored pigment and maximizes the degassing effect may be used.

As a wax, any conventional wax known in the art may be used without limitation, and a polyethylene wax, a polyamide wax, and the like may be used. For example, scratch resistance and hardness may be improved by using a polytetrafluoroethylene (PTFE)-based wax, which has excellent wear resistance and slip properties.

A pinhole prevention agent may prevent pinholes from forming in the coating film and improve appearance characteristics by allowing volatile substances to be released from the coating film during the curing process. As non-limiting examples of pinhole prevention agents, an amide-based (such as Ceraflour 960 from BYK-Chemie), a polypropylene-based, and a stearic acid-based pinhole prevention agent may be used. For example, benzoin or a mixture of benzoin and amide-based pinhole prevention agents may be used as a pinhole prevention agent, and in this case, the effect of preventing pinholes when forming an overcoat for high corrosion resistance may be excellent.

The additive may be appropriately added within a content range known in the art, and for example, based on the total weight of the topcoat coating composition, the additive may be included in an amount of 0.01 to 10 wt%, respectively.

The powder coating composition according to the present invention may be prepared by methods known in the art. For example, the powder coating composition may be prepared through processes such as raw material weighing, dry premixing, dispersion and coarse grinding, grinding, classification, and the like. For example, the powder coating composition may be prepared by introducing a mixture of respective components constituting the above-described undercoat coating composition into a container mixer to mix the mixture uniformly, melt-mixing the mixed composition, and then pulverizing the composition. For example, the powder coating composition may be prepared by melt-dispersing the raw material mixture at 70 to 130°C using a melt-kneading device such as a kneader or an extruder to prepare chips having a predetermined thickness (e.g., 1 to 5 mm), pulverizing the prepared chips to a size of 40 to 80 µm using a grinding device such as a high-speed mixer, and classifying the pulverized chips. The topcoat coating composition may also be prepared using the same method as described above.

The classification process is not particularly limited and may be performed, for example, by filtering with 80 to 200 mesh. Thus, powder coatings with an average particle size of 20 to 80 µm may be obtained. The average particle size of the powder is not particularly limited, but when it satisfies the above range, the coating workability and appearance characteristics of the coating film may be improved.

To improve the fluidity of the powder coating, the surface of the powder coating particles according to the present invention may be coated with a fine powder such as a polyethylene wax or fumed silica. To this end, a grinding mixing method in which fine powder is mixed by being added during grinding or a dry mixing method using a Henschel mixer and the like may be used.

### [Modes of the Invention]

Hereinafter, the present invention will be described in more detail through examples. However, the following examples are only intended to aid understanding of the present invention and do not limit the scope of the present invention to the examples in any way.

### [Examples 1 to 10: Undercoat powder coating]

Each of the components was added and premixed in a mixing tank according to the compositions shown in Table 1 below. Thereafter, the mixture was melt-dispersed at 100°C in a disperser to prepare chips. The prepared chips were pulverized using a high-speed mixer to prepare an undercoat coating composition of each Example, which had an average particle size of 25 to 55 µm.

### [Comparative Examples 1 to 4: Undercoat powder coating]

An undercoat coating composition of each Comparative Example was prepared in the same manner as in Examples, except that the compositions shown in Table 2 below were used.

**[Table 1]**

| Components (% by weight) | Examples | | | | | | | | | |
|---|---|---|---|---|---|---|---|---|---|---|
| | 1 | 2 | 3 | 4 | 5 | 6 | 7 | 8 | 9 | 10 |
| Epoxy resin 1 | 69 | | | | | | | | | |
| Epoxy resin 2 | | 69 | | 69 | 69 | 69 | 69 | 69 | 67 | 73 |
| Epoxy resin 3 | | | 69 | | | | | | | |
| Epoxy toughening agent 1 | | | | 9 | | | | | | |
| Epoxy toughening agent 2 | 9 | 9 | 9 | | | 9 | 9 | 9 | 11 | 7 |
| Epoxy toughening agent 3 | | | | | 9 | | | | | |
| Hardener 1 | | | | | | 19 | | | | |
| Hardener 2 | 19 | 19 | 19 | 19 | 19 | | | 19 | 19 | 17 |
| Hardener 3 | | | | | | | 19 | | | |
| Curing accelerator | 1.2 | 1.2 | 1.2 | 1.2 | 1.2 | 1.2 | 1.2 | 1.2 | 1.2 | 1.2 |
| Foaming agent 1 | 0.5 | 0.5 | 0.5 | 0.5 | 0.5 | 0.5 | 0.5 | | 0.5 | 0.5 |
| Foaming agent 2 | | | | | | | | 0.5 | | |
| Extender pigment 1 | | | | | | | | | | |
| Color pigment | 0.5 | 0.5 | 0.5 | 0.5 | 0.5 | 0.5 | 0.5 | 0.5 | 0.5 | 0.5 |
| Additive 1 | 0.3 | 0.3 | 0.3 | 0.3 | 0.3 | 0.3 | 0.3 | 0.3 | 0.3 | 0.3 |
| Additive 2 | 0.1 | 0.1 | 0.1 | 0.1 | 0.1 | 0.1 | 0.1 | 0.1 | 0.1 | 0.1 |
| Additive 3 | 0.1 | 0.1 | 0.1 | 0.1 | 0.1 | 0.1 | 0.1 | 0.1 | 0.1 | 0.1 |
| Additive 4 | 0.3 | 0.3 | 0.3 | 0.3 | 0.3 | 0.3 | 0.3 | 0.3 | 0.3 | 0.3 |
| Total | 100 | 100 | 100 | 100 | 100 | 100 | 100 | 100 | 100 | 100 |

**[Table 2]**

| Component (% by weight) | Comparative Examples | | | |
|---|---|---|---|---|
| | 1 | 2 | 3 | 4 |
| Epoxy resin 1 | | | | |
| Epoxy resin 2 | 73 | 69.5 | 69 | 69 |
| Epoxy resin 3 | | | | |
| Epoxy toughening agent 1 | | | | |
| Epoxy toughening agent 2 | | 9 | 9 | 9 |
| Epoxy toughening agent 3 | | | | |
| Hardener 1 | | | | |
| Hardener 2 | 23.7 | 19 | 19 | 18.5 |
| Hardener 3 | | | | |
| Curing accelerator | 1.5 | 1.2 | 1.2 | 1.2 |
| Foaming agent 1 | 0.5 | | | 1 |
| Foaming agent 2 | | | | |
| Extender pigment 1 | | | 0.5 | |
| Color pigment | 0.5 | 0.5 | 0.5 | 0.5 |
| Additive 1 | 0.3 | 0.3 | 0.3 | 0.3 |
| Additive 2 | 0.1 | 0.1 | 0.1 | 0.1 |
| Additive 3 | 0.1 | 0.1 | 0.1 | 0.1 |
| Additive 4 | 0.3 | 0.3 | 0.3 | 0.3 |
| Total | 100 | 100 | 100 | 100 |

Epoxy resin 1: bisphenol A type epoxy resin (epoxy equivalent weight: 1,100 g/eq; weight average molecular weight: 7,000 g/mol; viscosity (200°C): 18 poise; and softening point: 115°C)
Epoxy resin 2: bisphenol A type epoxy resin (epoxy equivalent weight: 1,150 g/eq; weight average molecular weight: 8,000 g/mol; viscosity (200°C): 23 poise; and softening point: 118°C)
Epoxy resin 3: bisphenol A type epoxy resin (epoxy equivalent weight: 1,200 g/eq; weight average molecular weight: 9,000 g/mol; viscosity (200°C); 28 poise; and softening point: 122°C)
Epoxy toughening agent 1: epoxy resin (hydrophilic block: polyethylene oxide, hydrophobic block: polybutylene oxide; epoxy equivalent weight: 950 g/eq; and melting point: 95°C)
Epoxy toughening agent 2: epoxy resin (hydrophilic block: polyethylene-polypropylene copolymer, hydrophobic block: polyhexylene oxide; epoxy equivalent weight: 990 g/eq; and melting point: 100°C)
Epoxy toughening agent 3: epoxy resin (hydrophilic block: polymethylmethacrylate, hydrophobic block: polydodecylene oxide; epoxy equivalent weight: 1,100 g/eq; and melting point: 95°C)
Hardener 1: bisphenol A type phenol hardener (OH equivalent weight: 230 g/eq; softening point: 83°C, and viscosity (150°C): 2 poise)
Hardener 2: bisphenol A type phenol hardener (OH equivalent weight: 250 g/eq; softening point: 87°C; and viscosity (150°C): 3 poise)
Hardener 3: bisphenol A type phenol hardener (OH equivalent weight: 280 g/eq; softening point: 95°C; and viscosity (150°C): 5 poise).
Curing accelerator: bisphenol A type epoxy-modified imidazole catalyst resin (amine value: 190 mgKOH/g)
Foaming agent 1: hydrazide-based foaming agent
Foaming agent 2: isopentane-based foaming agent
Extender pigment 1: zinc powder (average particle size: 6 to 10 µm)
Color pigment: carbon black
Additive 1: leveling agent (Litmus)
Additive 2: benzoin (Miwon Specialty Chemical Co., Ltd.)
Additive 3: micronized modified amide wax (BYK Chemie)
Additive 4: polyethylene wax (Shamrock)

### [Experimental Example: Evaluation of properties]

The properties of each of the undercoat coating compositions prepared in Examples and Comparative Examples were evaluated as follows. The results are shown in Tables 3 and 4 below.

### Preparation of sample A

Samples (dry coating film thickness: 80±10 µm) were prepared by electrostatically spraying each powder coating of the Examples and Comparative Examples onto 75 mm ×150 mm × 0.7 mm CR steel plates and then drying them in a hot air oven (180 °C) for 10 minutes.

### Adhesion

According to ISO 2409, adhesion was evaluated by dividing 10 sections at 1 mm intervals in each sample A and performing a tape peeling test.

### [Evaluation standard]

5B: excellent, 4B: good, 3B: average, 2B or lower: poor

### Hardness

Using a pencil hardness tester, a Mitsubishi pencil was sharpened to make flat edges, and then 30 mm lines were drawn five times on each sample A at 45 degrees and 1kgf, and the case where there was no more than one scratch was considered the pencil hardness of the coating film (hardness: 2H > H > F > HB > B > 2B).

### Preparation of sample B

Samples were prepared by preheating coil springs with a diameter of 16 mm in a hot air oven (120 °C) for 40 minutes, applying each powder coating according to the Examples and Comparative Examples (coating film thickness: 500-700 µm), and drying the same in a hot air oven (180 °C) for 30 minutes.

### Low-temperature impact resistance

After each sample B was left at -40 °C for 24 hours, the coating film was impacted with a force of 90N using an Erichen impact resistance tester according to DIN ISO 4532, and the diameter of the resulting mark was determined. The smaller the diameter of the mark, the better the low-temperature impact resistance. When the side to which impact was applied peeled off, it was evaluated as defective.

### Chipping resistance

After evaluating the chipping property of each sample B according to GM14700, whether rust occurred was checked after the 480-hour salt spray test according to the ASTM B117 standard.

### [Evaluation standard]

Good: no rust, Poor: occurrence of rust

### Salt spray resistance

For each sample B, after conducting a salt spray resistance test according to ASTM B117 standard for 1,000 hours, the swelling of the cut area and one-side peeling width through the tape test were checked. The smaller the one-side peeling width, the better the salt spray resistance.

### Coating film thickness at which pinholes occur

Each sample B was observed with the naked eye, and the thickness of the coating film at which pinholes occur was measured to determine the coating film thickness at which pinholes began to occur. The thicker the coating film in which pinholes began to form, the better the properties.

### Coating efficiency

After electrostatically spraying 20 g of the powder coatings according to the Examples and Comparative Examples at the same distance (20 cm) on 400 mm × 500 mm × 0.7 mm CR steel plates, the weight of each applied coating was measured to calculate the coating efficiency (%). The higher the coating efficiency, the better the properties.

**[Table 3]**

| | Examples | | | | | | | | | |
|---|---|---|---|---|---|---|---|---|---|---|
| | 1 | 2 | 3 | 4 | 5 | 6 | 7 | 8 | 9 | 10 |
| Adhesiveness | 5B | 5B | 5B | 4B | 5B | 4B | 4B | 5B | 4B | 5B |
| Hardness | 2H | 2H | H | 2H | 2H | H | 2H | 2H | 2H | H |
| Low-temperature impact resistance (mm) | 1.5 | 0.9 | 1.2 | 1.1 | 1.2 | 1.1 | 1.5 | 0.9 | 1.2 | 1.4 |
| Chipping resistance | Good | Good | Good | Good | Good | Good | Good | Good | Good | Good |
| Salt spray resistance (mm) | 0.1 | 0.1 | 0.2 | 0.1 | 0.4 | 0.2 | 0.2 | 0.1 | 0.3 | 0.2 |
| Film thickness at which pinholes occur (µm) | 1,075 | 1,090 | 1,030 | 1,070 | 1,035 | 1,055 | 1,070 | 1,090 | 1,055 | 1,060 |
| Coating efficiency (%) | 73 | 75 | 71 | 74 | 72 | 72 | 73 | 75 | 71 | 71 |

**[Table 4]**

| | Comparative Examples | | | |
|---|---|---|---|---|
| | 1 | 2 | 3 | 4 |
| Adhesiveness | H | 4B | B | 3B |
| Hardness | H | B | H | 2B |
| Low-temperature impact resistance (mm) | Completely peeled off | Completely peeled off | 1 | 1 |
| Chipping resistance | Good | Poor | Good | Good |
| Salt spray resistance (mm) | 1 | 0.6 | 1.6 | 0.6 |
| Film thickness at which pinholes occur (µm) | 1,010 | 1,050 | 760 | 890 |
| Coating efficiency (%) | 69 | 70 | 35 | 69 |

As seen from the results in Tables 3 and 4, the powder coatings of Examples 1 to 10 according to the present invention had excellent properties across all test items. On the other hand, the powder coating of Comparative Example 1, which did not include an epoxy toughening agent, had particularly poor adhesiveness, low-temperature impact resistance, and salt spray resistance compared to those of Examples, and the powder coating of Comparative Example 2, which did not include a foaming agent, had particularly poor hardness, low-temperature impact resistance, and chipping resistance compared to those of Examples. Also, the powder coating of Comparative Example 3, which included zinc instead of the foaming agent, had particularly poor adhesiveness, salt spray resistance, and coating efficiency compared to those of Examples, and also had a thin film thickness at which pinholes occur, and the powder coating of Comparative Example 4, which included an excessive amount of a foaming agent, had particularly poor hardness compared to those of Examples, and also had a thin film thickness at which pinholes occur.

### [Examples 11 to 22: Topcoat powder coating]

Each of the components was added and premixed in a mixing tank according to the compositions shown in Tables 5 and 6 below. Thereafter, the mixture was melt-dispersed at 100°C in a disperser to prepare chips. The prepared chips were pulverized using a high-speed mixer to prepare a topcoat coating composition of each Example, which had an average particle size of 25 to 55 µm.

### [Comparative Examples 5 to 9: Topcoat powder coating]

A topcoat coating composition of each Comparative Example was prepared in the same manner as in Examples, except that the compositions shown in Table 7 below were used.

**[Table 5]**

| Component (% by weight) | Examples | | | | | |
|---|---|---|---|---|---|---|
| | 11 | 12 | 13 | 14 | 15 | 16 |
| Epoxy resin 1 | 60.5 | | | | | |
| Epoxy resin 2 | | 60.5 | | 60.5 | 60.5 | 60.5 |
| Epoxy resin 3 | | | 60.5 | | | |
| Epoxy toughening agent 1 | | | | 6.7 | | |
| Epoxy toughening agent 2 | 6.7 | 6.7 | 6.7 | | | 6.7 |
| Epoxy toughening agent 3 | | | | | 6.7 | |
| Hardener 1 | | | | | | 10.6 |
| Hardener 2 | 10.6 | 10.6 | 10.6 | 10.6 | 10.6 | |
| Hardener 3 | | | | | | |
| Foaming agent 1 | 0.6 | 0.6 | 0.6 | 0.6 | 0.6 | 0.6 |
| Foaming agent 2 | | | | | | |
| Curing accelerator | 1.3 | 1.3 | 1.3 | 1.3 | 1.3 | 1.3 |
| Extender pigment 2 | 16.8 | 16.8 | 16.8 | 16.8 | 16.8 | 16.8 |
| Extender pigment 3 | | | | | | |
| Extender pigment 4 | | | | | | |
| Extender pigment 5 | | | | | | |
| Color pigment | 0.7 | 0.7 | 0.7 | 0.7 | 0.7 | 0.7 |
| Additive 1 | 0.7 | 0.7 | 0.7 | 0.7 | 0.7 | 0.7 |
| Additive 2 | 0.5 | 0.5 | 0.5 | 0.5 | 0.5 | 0.5 |
| Additive 3 | 0.2 | 0.2 | 0.2 | 0.2 | 0.2 | 0.2 |
| Additive 4 | 0.2 | 0.2 | 0.2 | 0.2 | 0.2 | 0.2 |
| Additive 5 | 0.7 | 0.7 | 0.7 | 0.7 | 0.7 | 0.7 |
| Additive 6 | 0.5 | 0.5 | 0.5 | 0.5 | 0.5 | 0.5 |
| Total | 100 | 100 | 100 | 100 | 100 | 100 |

**[Table 6]**

| Component (% by weight) | Examples | | | | | |
|---|---|---|---|---|---|---|
| | 17 | 18 | 19 | 20 | 21 | 22 |
| Epoxy resin 1 | | | 50 | 64 | | |
| Epoxy resin 2 | 60.5 | 60.5 | | | 60.5 | 60.5 |
| Epoxy resin 3 | | | | | | |
| Epoxy toughening agent 1 | | | 15 | 5 | | |
| Epoxy toughening agent 2 | 6.7 | 6.7 | | | 6.7 | 6.7 |
| Epoxy toughening agent 3 | | | | | | |
| Hardener 1 | | | 13 | 9 | | |
| Hardener 2 | | 10.6 | | | 10.6 | 10.6 |
| Hardener 3 | 10.6 | | | | | |
| Foaming agent 1 | 0.6 | | 0.6 | 0.6 | 0.6 | 0.6 |
| Foaming agent 2 | | 0.6 | | | | |
| Curing accelerator | 1.3 | 1.3 | 1.3 | 1.3 | 1.3 | 1.3 |
| Extender pigment 2 | 16.8 | 16.8 | 16.8 | 16.8 | | |
| Extender pigment 3 | | | | | 16.8 | |
| Extender pigment 4 | | | | | | 16.8 |
| Extender pigment 5 | | | | | | |
| Color pigment | 0.7 | 0.7 | 0.7 | 0.7 | 0.7 | 0.7 |
| Additive 1 | 0.7 | 0.7 | 0.7 | 0.7 | 0.7 | 0.7 |
| Additive 2 | 0.5 | 0.5 | 0.5 | 0.5 | 0.5 | 0.5 |
| Additive 3 | 0.2 | 0.2 | 0.2 | 0.2 | 0.2 | 0.2 |
| Additive 4 | 0.2 | 0.2 | 0.2 | 0.2 | 0.2 | 0.2 |
| Additive 5 | 0.7 | 0.7 | 0.5 | 0.5 | 0.7 | 0.7 |
| Additive 6 | 0.5 | 0.5 | 0.5 | 0.5 | 0.5 | 0.5 |
| Total | 100 | 100 | 100 | 100 | 100 | 100 |

**[Table 7]**

| Component (% by weight) | Comparative Examples | | | | |
|---|---|---|---|---|---|
| | 5 | 6 | 7 | 8 | 9 |
| Epoxy resin 1 | | | | | |
| Epoxy resin 2 | 60.9 | 67.36 | 70 | 60.5 | 60.5 |
| Epoxy resin 3 | | | | | |
| Epoxy toughening agent 1 | | | | | |
| Epoxy toughening agent 2 | 6.77 | | 9.6 | 6.7 | 6.7 |
| Epoxy toughening agent 3 | | | | | |
| Hardener 1 | | | | | |
| Hardener 2 | 10.69 | 10.51 | 15 | 10.6 | 10.6 |
| Hardener 3 | | | | | |
| Foaming agent 1 | | 0.59 | 0.6 | 0.6 | 1 |
| Foaming agent 2 | | | | | |
| Curing accelerator | 1.35 | 1.35 | 1.3 | 1.3 | 1.3 |
| Extender pigment 2 | 16.91 | 16.84 | | | 16.4 |
| Extender pigment 3 | | | | | |
| Extender pigment 4 | | | | | |
| Extender pigment 5 | | | | 16.8 | |
| Color pigment | 0.68 | 0.67 | 0.7 | 0.7 | 0.7 |
| Additive 1 | 0.68 | 0.67 | 0.7 | 0.7 | 0.7 |
| Additive 2 | 0.47 | 0.47 | 0.5 | 0.5 | 0.5 |
| Additive 3 | 0.2 | 0.2 | 0.2 | 0.2 | 0.2 |
| Additive 4 | 0.2 | 0.2 | 0.2 | 0.2 | 0.2 |
| Additive 5 | 0.68 | 0.67 | 0.7 | 0.7 | 0.7 |
| Additive 6 | 0.47 | 0.47 | 0.5 | 0.5 | 0.5 |
| Total | 100 | 100 | 100 | 100 | 100 |

Extender pigment 2: barium sulfate (average particle size: 12 µm)
Extender pigment 3: dolomite (average particle size: 13 µm)
Extender pigment 4: barium sulfate (average particle size: 15 µm)
Extender pigment 5: barium sulfate (average particle size: 8 µm)
Additive 5: polyacrylic copolymer (BYK-Chemie)
Additive 6: polytetrafluoroethylene wax (Lubrizol Corp.)

The remaining components are the same as the components in Table 1.

### [Experimental Example: Evaluation of properties]

Each of the topcoat coating compositions prepared in Examples 11 to 22 and Comparative Examples 5 to 9 was applied on the undercoat formed using the undercoat coating composition of Example 2, and the properties of the topcoat coating film were then evaluated. Also, the topcoat coating composition prepared in Example 12 was applied on the undercoat formed using the undercoat coating composition of Comparative Example 3, and the properties of the topcoat coating film were then evaluated. Each property evaluation was conducted in the same manner as for the undercoat coating composition. The evaluation results are shown in Tables 8 to 10 below.

**[Table 8]**

| | Experimental Examples | | | | | |
|---|---|---|---|---|---|---|
| | 1 | 2 | 3 | 4 | 5 | 6 |
| Undercoat coating | Example 2 | Example 2 | Example 2 | Example 2 | Example 2 | Example 2 |
| Topcoat coating | Example 11 | Example 12 | Example 13 | Example 14 | Example 15 | Example 16 |
| Adhesiveness | 5B | 5B | 5B | 4B | 5B | 4B |
| Hardness | 2H | 2H | H | 2H | 2H | H |
| Low-temperature impact resistance (mm) | 1.5 | 0.9 | 1.2 | 1.1 | 1.2 | 1.1 |
| Chipping resistance | Good | Good | Good | Good | Good | Good |
| Salt spray resistance (mm) | 0.1 | 0.1 | 0.2 | 0.1 | 0.4 | 0.2 |
| Film thickness at which pinholes occur (µm) | 1,075 | 1,090 | 1,030 | 1,070 | 1,035 | 1,055 |
| Coating efficiency (%) | 73 | 75 | 71 | 74 | 72 | 72 |

**[Table 9]**

| | Experimental Examples | | | | | |
|---|---|---|---|---|---|---|
| | 7 | 8 | 9 | 10 | 11 | 12 |
| Undercoat coating | Example 2 | Example 2 | Example 2 | Example 2 | Example 2 | Example 2 |
| Topcoat coating | Example 17 | Example 18 | Example 19 | Example 20 | Example 21 | Example 22 |
| Adhesiveness | 4B | 5B | 4B | 5B | 5B | 5B |
| Hardness | 2H | 2H | 2H | H | 2H | 2H |
| Low-temperature impact resistance (mm) | 1.5 | 0.9 | 1.2 | 1.4 | 0.9 | 0.9 |
| Chipping resistance | Good | Good | Good | Good | Good | Good |
| Salt spray resistance (mm) | 0.2 | 0.1 | 0.3 | 0.2 | 0.1 | 0.1 |
| Film thickness at which pinholes occur (µm) | 1,070 | 1,090 | 1,055 | 1,060 | 1,090 | 1,090 |
| Coating efficiency (%) | 73 | 75 | 71 | 71 | 75 | 75 |

**[Table 10]**

| | Experimental Examples | | | | | |
|---|---|---|---|---|---|---|
| | 13 | 14 | 15 | 16 | 17 | 18 |
| Undercoat coating | Example 2 | Example 2 | Example 2 | Example 2 | Example 2 | Comparative Example 3 |
| Topcoat coating | Comparative Example 5 | Comparative Example 6 | Comparative Example 7 | Comparative Example 8 | Comparative Example 9 | Example 12 |
| Adhesiveness | 3B | H | 4B | B | 4B | B |
| Hardness | 2B | H | H | 2H | B | H |
| Low-temperature impact resistance (mm) | Completely peeled off | Completely peeled off | 1.4 | 0.9 | 1.3 | 1 |
| Chipping resistance | Poor | Good | Poor | Good | Good | Good |
| Salt spray resistance (mm) | 0.6 | 1 | 0.2 | 0.2 | 0.6 | 1.6 |
| Film thickness at which pinholes occur (µm) | 1,050 | 1,010 | 720 | 920 | 690 | 760 |
| Coating efficiency (%) | 70 | 69 | 71 | 71 | 69 | 29 |

As seen from the results in Tables 8 to 10, the coating films of Experimental Examples 1 to 12, in which the powder coating of Example 2 according to the present invention was used as the undercoat and each of the powder coatings of Examples 11 to 22 according to the present invention was used as the topcoat, exhibited excellent properties across all measurement items. On the other hand, the coating film of Experimental Example 13, in which the powder coating of Comparative Example 5, which did not include a foaming agent, was used as the topcoat, showed particularly poor hardness, low-temperature impact resistance, and chipping resistance compared to Experimental Examples 1 to 12, the coating film of Experimental Example 14, in which the powder coating of Comparative Example 6, which did not include an epoxy toughening agent, was used as the topcoat, showed particularly poor adhesiveness, low-temperature impact resistance, and salt spray resistance compared to Experimental Examples 1 to 12, and the coating film of Experimental Example 15, in which the powder coating of Comparative Example 7, which did not include an extender pigment, was used as the topcoat, showed particularly poor chipping resistance compared to Experimental Examples 1 to 12, and also had a thin film thickness at which pinholes occur. The coating film of Experimental Example 16, in which the powder coating of Comparative Example 8, which included an extender pigment having an average particle size of less than 10 µm, was used as the topcoat, showed particularly poor adhesiveness compared to Experimental Examples 1 to 12, and also had a thin film thickness at which pinholes occur, and the coating film of Experimental Example 17, in which the powder coating of Comparative Example 9, which included an excessive amount of a foaming agent, was used as the topcoat, showed particularly poor hardness compared to Experimental Examples 1 to 12, and also had a thin film thickness at which pinholes occur. The coating film of Experimental Example 18, in which the powder coating of Comparative Example 3, which contained zinc, was applied as the undercoat and the powder coating of Example 12 according to the present invention was then applied as the topcoat, showed poor adhesiveness, salt spray resistance, and coating efficiency compared to Experimental Examples 1 to 12, and also had a thin film thickness at which pinholes occur.

### [Industrial Applicability]

The present invention provides a two-coat coating system using a powder coating composition exhibiting excellent corrosion resistance, impact resistance, chipping resistance, hardness, thick-coated film pinhole stability, and coating efficiency. **In** particular, the two-coat coating system according to the present invention can be applied to coil springs on the underside of automobiles.

## Claims

1. A two-coat coating system comprising an undercoat coating composition and a topcoat coating composition,
wherein the undercoat coating composition is a powder coating composition that comprises a bisphenol A type epoxy resin, an epoxy toughening agent, a hardener, and a foaming agent and does not contain zinc, and the foaming agent is included in an amount of 0.7% by weight or less based on the total weight of the undercoat coating composition, and
the topcoat coating composition is a powder coating composition that comprises a bisphenol A type epoxy resin, an epoxy toughening agent, a hardener, a foaming agent, and an extender pigment having an average particle size of 10 µm or more, and the foaming agent is included in an amount of 0.7% by weight or less based on the total weight of the topcoat coating composition.

2. The two-coat coating system of claim 1, wherein the bisphenol A type epoxy resin has an epoxy equivalent weight of 1,000 to 1,500 g/eq, a weight average molecular weight of 5,000 to 12,000 g/mol, a viscosity (200°C) of 10 to 35 poise, and a softening point of 100 to 140°C,
the epoxy toughening agent has an epoxy equivalent weight of 800 to 1,200 g/eq and a melting point of 80 to 120°C, and
the hardener is a bisphenol A type phenol hardener that has a hydroxyl equivalent weight of 200 to 300 g/eq, a softening point of 75 to 95°C, and a viscosity (150°C) of 1 to 10

3. The two-coat coating system of claim 1, wherein the bisphenol A type epoxy resin is contained in amount of 65 to 75% by weight, the epoxy toughening agent is contained in amount of 5 to 15% by weight, and the hardener is contained in amount of 15 to 25% by weight, based on the total weight of the undercoat coating composition, and
the bisphenol A type epoxy resin is contained in amount of 50 to 65% by weight, the epoxy toughening agent is contained in amount of 5 to 15% by weight, the hardener is contained in amount of 5 to 15% by weight, and the extender pigment is contained in amount of 5 to 50% by weight, based on the total weight of the topcoat coating composition.

4. The two-coat coating system of claim 1, further comprising a wax and a dispersant, wherein the wax is a polytetrafluoroethylene (PTFE)-based wax, and the dispersant is a polyacrylic dispersant.
